# EUROPEAN PATENT APPLICATION

(11) **EP 2 426 888 A2**
(43) Date of publication of application: **07.03.2012**
(21) Application number: 11163681.7
(22) Date of filing: 26.04.2011
(51) Int. Cl.: H04L 29/06

(54) **Methods and apparatus associated with dynamic access control based on a task/trouble ticket**

(30) Priority: 07.09.2010 US 876652
(71) Applicant: Juniper Networks, Inc., Sunnyvale, CA 94089-1206 (US)
(72) Inventor: Khan, Nadeem, KA 560093, Bangalore (IN); Ali, Ahzam, KA 560035, Bangalore (IN)
(74) Representative: Harris, Ian Richard

(57) **Abstract**

In some embodiments, an apparatus includes a memory, a processing device, a task division module implemented within at least one of the memory or the processing device, and a dynamic authentication module implemented within at least one of the memory or the processing device. The task division module is operable to receive a request associated with a task to be performed and to divide the task into multiple subtasks. The dynamic authentication module is operable to provide an access right to an operator from a set of operators assigned a subtask from the multiple subtasks. The access right for the operator is an access right to complete the subtask assigned to that operator from the set of operators.

## Description

### Background

Some embodiments described herein relate generally to access control, and, in particular, to methods and apparatus for providing dynamic access control based on a task.

Known workflow systems use task and/or trouble tickets to track issues and/or to assign tasks to be performed. For example, a user of such a workflow system can submit a trouble ticket when the user experiences a problem and/or issue with the operation of a communication system. An administrator of the communication system can receive the trouble ticket and assign the task of resolving the issue associated with the trouble ticket to an operator. In response to receiving the trouble ticket, the operator can perform a task and/or series of tasks to resolve the problem and/or issue with the operation of the communication system. Once the problem and/or issue is resolved, the trouble ticket can be closed.

In such known workflow systems, each operator typically has broad access to the communication system so that they can effectively perform a wide variety of tasks on a wide range of objects (e.g., devices, accounts, users, policies, etc.). Much of the broad access provided to the operators is unnecessary to perform common tasks on a specific object but is provided in case such access becomes necessary to perform another task. Thus, such broad access is infrequently needed.

Accordingly, a need exists for a task management system that can divide a task into multiple subtasks. Additionally, a need exists for a task management system that provides an operator a dynamic level and/or type of access to a communication system based on an assigned task or subtask.

### Summary of the Invention

In some embodiments, an apparatus includes a memory, a processing device, a task division module implemented within at least one of the memory or the processing device, and a dynamic authentication module implemented within at least one of the memory or the processing device. The task division module is operable to receive a request associated with a task to be performed and to divide the task into multiple subtasks. The dynamic authentication module is operable to provide an access right to an operator from a set of operators assigned a subtask from the multiple subtasks. The access right for the operator is an access right to complete the subtask assigned to that operator from the set of operators.

### Brief Description of the Drawings

FIG. 1 is a schematic diagram illustrating a communication system, according to an embodiment.

FIG. 2 is a schematic diagram of a processor of an authentication server, according to another embodiment.

FIG. 3 illustrates a diagram of a status database, according to another embodiment.

FIG. 4 illustrates an example of a form to be completed by a submitter of a trouble ticket, according to another embodiment.

FIG. 5 is a flow chart illustrating a method of managing a task, according to another embodiment.

### Detailed Description

In some embodiments, an apparatus includes a memory, a processing device, a task division module implemented within at least one of the memory or the processing device, and a dynamic authentication module implemented within at least one of the memory or the processing device. The task division module is operable to receive a request associated with a task to be performed and to divide the task into multiple subtasks. The dynamic authentication module is operable to provide an access right to an operator from a set of operators assigned a subtask from the multiple subtasks. The access right for the operator is an access right to complete the subtask assigned to that operator from the set of operators.

In such embodiments, the dynamic authentication module allows the system to dynamically provide access to operators as needed. Accordingly, a broad general access right (e.g., a level and/or type of access) is not provided to the operators. As such, an access right specific to the task and/or subtask to be performed is provided. In some embodiments, the access right is also specific to the objects (e.g., devices, accounts, users, policies, etc.) related to the task and/or subtask to be performed.

In some embodiments, a non-transitory processor-readable medium stores code representing instructions to cause a processor to receive a request associated with a task to be performed within a system and identify a first subtask and a second subtask associated with the task. The code further represents instructions to cause the processor to provide, at a first time, a first access right to a first operator based on the first subtask in response to the first operator being assigned the first subtask. The first access right is an access right to complete the first subtask but not the second subtask. The code represents instructions to cause the processor to receive, at a second time after the first time, an indication that the first operator has completed the first subtask and to revoke the first access right from the first operator based on the indication. The code further represents instructions to cause the processor to provide a second access right to a second operator based on the second subtask in response to the indication and the second operator being assigned the second subtask. The second access right is an access right to complete the second subtask but not the first subtask.

In such embodiments, by revoking the first access right from the first operator once the first operator has completed the first subtask, the system further limits the access rights provided to the first operator of the system while maintaining the appropriate access rights. Also, by providing the second access right to the second operator in response to the indication, the second operator is not provided the access right to complete the second subtask until this access right can be used by the second operator to perform the second subtask.

In some embodiments, an apparatus includes a memory, a processing device, a task assignment module implemented within at least one of the memory or the processing device, and a dynamic authentication module implemented within at least one of the memory or the processing device. The task assignment module is operable to receive a request associated with a task and assign the task to an operator based at least in part on at least one of a type of the task, a priority level of the task, a qualification of the operator, or a schedule of the operator. The dynamic authentication module is operable to provide an access right to the operator such that the operator can perform the task. The dynamic authentication module is operable to revoke the access right when the operator completes the task. The access right is an access right to complete the task.

As used in this specification, the singular forms "a," "an" and "the" include plural referents unless the context clearly dictates otherwise. Thus, for example, the term "a module" is intended to mean a single module or a combination of modules.

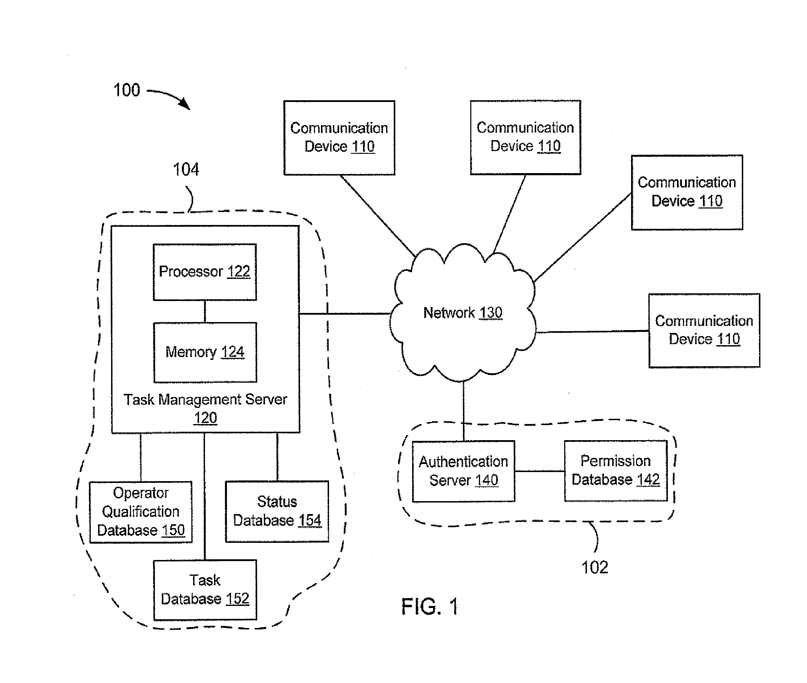

FIG. 1 is a schematic diagram illustrating a communication system 100, according to an embodiment. The communication system 100 includes a task management system 104, an authentication system 102 and multiple communication devices 110 interconnected via a network 130. Specifically, each communication device 110 can communicate with the other communication devices 110, the authentication system 102 and/or the task management system 104 via the network 130. The network 130 can be any type of network (e.g., a local area network (LAN), a wide area network (WAN), a virtual network, a telecommunications network) implemented as a wired network and/or wireless network.

Each of the communication devices 110 can be, for example, a server, a host device, a storage device, a computing entity (e.g., a personal computing device such as a desktop computer, a laptop computer, etc.), a mobile phone, a monitoring device, a personal digital assistant (PDA), and/or so forth. As such, each communication device 110 can include at least one memory and/or at least one processing device (e.g., a processor, an application specific integrated circuit (ASIC), a field programmable gate array (FPGA), etc.). Although not shown, in some embodiments, each of the communication devices 110 can include one or more network interface devices (e.g., a network interface card) to connect the communication devices 110 to the network 130. In some embodiments, for example, a first communication device 110 can be a desktop computer and a second communication device 110 can be a server. The first communication device 110 can access the second communication device 110 (e.g., to retrieve information from the server) via the network 130.

The authentication system 102 includes a permission database 142 and an authentication server 140. The permission database 142 can be any suitable database stored in a memory. For example, the permission database 142 can be a relational database, an object database, and/or the like. The permission database 142 can store permissions and/or credentials for a particular operator associated with the communication system 100. Such permissions and/or credentials can define a particular operator's access rights associated with the communication system 100 (e.g., an operator's level and/or type of access to the communication system 100 - including an operator's level of access to the task management system 104, the authentication system 102, resources associated with the network 130 and the communication devices 110). Such access rights can be used to authorize an operator to perform a function and/or access data within the communication system 100. As such, access rights specify what functions and/or data an operator can perform and/or access with respect to the communication system 100. In some embodiments, for example, an operator can have authorization to view a file, directory and/or database (read), modify the contents of a file, directory and/or database (write) and/or execute a program.

For example, an administrator of network 130 can have the credentials to access administrative functions associated with the network 130, such as, for example, modifying routing tables, updating operator credentials, and/or the like but not have access to certain files stored on the communication devices 110. Similarly, for example, a first operator of the communication system 100 can have credentials to access files and/or applications stored and/or executing on a first communication device 110, but not the files and/or applications stored and/or executing on a second communication device 110. Moreover, a second operator of the communication system 100 can have credentials to access files and/or applications stored and/or executing on both the first communication device 110 and the second communication device 110. Accordingly, the second operator can be said to have a higher level of access than the first operator while the network administrator can be said to have a different type of access than the first operator and the second operator.

The authentication server 140 can be any suitable server (e.g., a computing device) operable to authenticate an operator and/or a user to the network 130. For example, the authentication server 140 can include a processor to run and/or execute an authentication module (not shown). Such an authentication module can receive a request from an operator and/or a user of a communication device 110 to be authenticated to the communication system 100. Such a request can include credentials associated with the operator and/or user of the communication system 100. For example, the operator and/or user can provide a username and password to a communication device 110 that sends the usemame and password to the authentication server 140 via the network 130. In other embodiments, any other suitable authentication credential can be provided to a communication device 110 and sent to the authentication server 140, such as, for example, biometric information, information encoded on a barcode, a proximity card and/or a radiofrequency device, and/or the like.

The authentication server 140 queries the permission database 142 in response to receiving the request to determine an access right (e.g., level and/or type of access) associated with the credentials received. For example, the operator and/or user of a communication device 110 can be provided access to the objects, files and/or applications associated with that operator and/or user and the related access rights, while restricting access to objects, files and/or applications not associated with that operator and/or user. In some embodiments, if the credentials are not found in the permission database 142, the authentication server 140 can deny• the operator and/or user access to the communication system 100.

As described in further detail herein, the authentication server 140 can modify and/or update the permissions within the permission database 142 in response to a signal sent by the task management server 120 (described in further detail herein). For example, the authentication server 140 can modify the permission database 142 such that an operator is granted appropriate access rights to complete a task (e.g., minimum level and/or type of access to complete the task). Additionally, the authentication server 140 can revoke an operator's access rights once a task is completed.

The task management system 104 includes a task management server 120, a task database 152, a status database 154 and an operator qualification database 150. The task management system 104 is operable to run a task management application to define and manage tasks associated with the communication system 100. More specifically, in some embodiments, the task management application can manage workflow processes associated with a task and/or trouble ticket submitted by a user of the communication system 100, as described in further detail herein.

The task management server 120 includes a memory 124 and a processor 122. The memory 124 can be any suitable memory that stores code to be executed by the processor 122. In some embodiments, the memory 124 can be, for example, a random access memory (RAM), a read-only memory (ROM), a memory buffer, a hard drive, and/or so forth. In some embodiments, a task management application can be stored in the memory 124 of the task management server 120. As such, the processor 122 can process information and run and/or execute modules associated with the task management application.

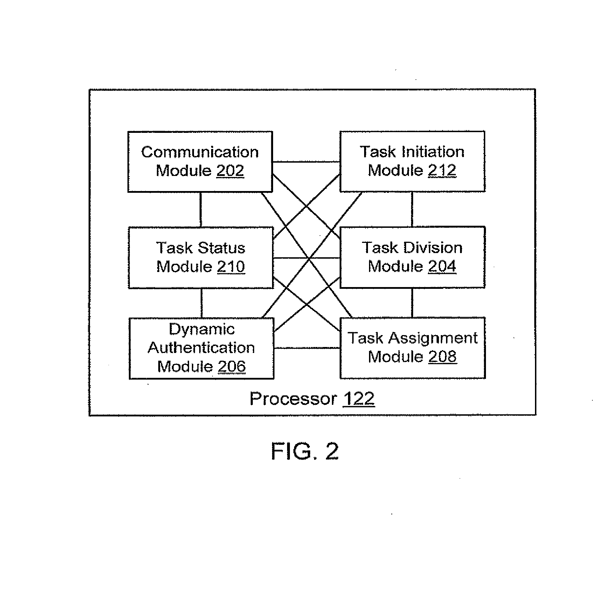

FIG. 2 illustrates a schematic diagram of the processor 122 within the task management server 120 of FIG. 1. The processor 122 includes a communication module 202, a task initiation module 212, a task division module 204, a task assignment module 208, a dynamic authentication module 206 and a task status module 210. Each module 202, 204, 206, 208, 210, 212 can be a process, application, virtual machine, and/or some other software module or a hardware module executed at the processor 122. As such, instructions that implement the modules 202, 204, 206, 208, 210, 212 can be stored within the memory 124 of the task management server 120 and executed at the processor 122 of the task management server 120.

Such modules can be portions of a task management application and can be in communication with each other. While each module is shown in FIG. 2 as being in direct communication with every other module, in other embodiments, each module need not be in direct communication with every other module. For example, a task assignment module might not be in direct communication with a communication module, but instead communicate with the communication module via another module within the processor (e.g., the dynamic authentication module 206 or the task status module 210).

The communication module 202 facilitates communication between the task management server 120 and the network 130. This allows the task management server 120 to send data to and/or receive data from the communication devices 110, the authentication server 140, and/or any other device operatively coupled to the network 130. In some embodiments, for example, the communication module 202 can receive a request associated with a task to be performed within the communication system 100 (e.g., to initiate a trouble ticket) from a communication device 110. Additionally, as described in further detail herein, the communication module 202 can send a request to the authentication server 140 to modify permissions of a specific operator based on the task to be performed within the communication system 100. In some embodiments, the communication module 202 can interact with a network interface device (e.g., a network interface card) (not shown) at the task management server 120 to facilitate communication with the network 130.

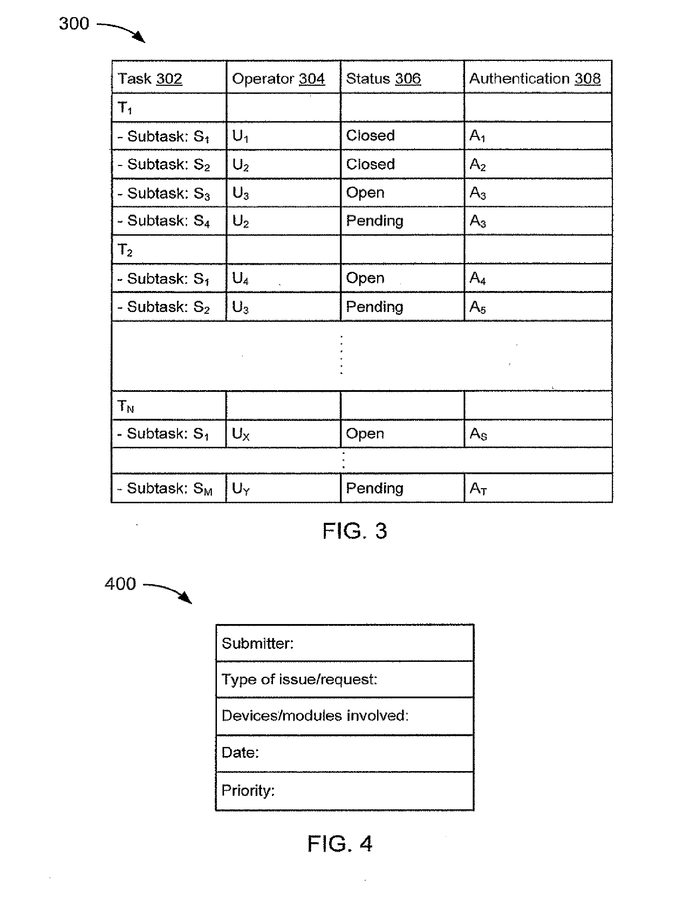

The task initiation module 212 receives a request associated with a task to be performed within the communication system 100 from the communication module 202 and initiate a task and/or trouble ticket based on the request. The request can be received by the task initiation module 212 in a form that the task initiation module 212 can parse. For example, as further described in detail herein with respect to FIG. 4, the request can include multiple parameters such as, for example, devices and/or modules involved, users involved, a type of issue and/or request, a priority level and/or any other suitable field. In some embodiments, the values associated with such fields can be selected from a predetermined list. For example, the priority level can be selected from three values (e.g., low, medium, high). For another example, the value of the type of issue and/or request field can be selected from a number of predetermined problems and/or issues that are known to arise within the communication system 100. Using the predetermined values, the task initiation module 212 can parse the request to accurately define a task and/or trouble ticket.

In other embodiments, any other method can be used to initiate a task and/or trouble ticket based on the request. For example, if the request is a written description of the issue and/or problem to be solved by the task, the task initiation module 212 can use optical character recognition (OCR) to recognize keywords from the written description. The task initiation module can then define the task and/or trouble ticket based on the keywords.

The task division module 204 divides a task into multiple subtasks. For example, the task division module 204 can receive a task to be performed within the communication system 100 (e.g., a task and/or trouble ticket received from the task initiation module 212), determine multiple steps and/or subtasks to be performed to complete the task and divide the task accordingly. In some embodiments, for example, the task division module 204 can query the task database 152 to identify the subtasks associated with a particular task. In such embodiments, the task database 152 can store a listing of common types of tasks and the subtasks to be performed to complete those tasks. Additionally, the task division module 204 can dynamically relate the tasks and/or subtasks with the appropriate objects (e.g., devices, accounts, users, policies, etc.). Similarly stated, the tasks and/or subtasks can be specifically associated with the objects on which the task and/or subtask is to be performed.

For example, if a task (e.g., a trouble ticket) includes "stopping Host A (e.g., a first communication device 110) from attempting a denial of service (DOS) attack on a Web Server B" (e.g., a second communication device 110 operatively coupled to the first communication device via the network 130), the task database 152 can store the subtasks of (1) defining an address associated with an internet protocol (IP) address of a host attempting a DOS attack and (2) assigning the address to a blacklisted address list in a network policy. Accordingly, when the task division module 204 queries the task database 152 with the task "stopping a host from attempting a denial of service attack," these two subtasks can be returned. The task division module 204 can dynamically adapt the generic task retrieved from the task database 152 to be specific to the involved host (e.g., Host A) and/or web server (e.g., Web Server B)). For example, the step of "defining an address associated with an IP address of a host attempting a DOS attack" can be adapted to be specific to Host A (e.g., "defining an address associated with an IP address of Host A"). Accordingly, the task and/or subtasks can be object specific.

In other embodiments, the task division module 204 can send a request to an operator to manually divide a task into subtasks. In some embodiments, each time the operator manually divides a task into subtasks, the subtasks associated with that particular type of task can be stored in the task database 152 such that subsequent similar tasks can be automatically partitioned and/or divided into subtasks. Accordingly, the task database 152 can be dynamically built and/or constructed as tasks are manually assigned.

In some embodiments, the task division module 204 can also order the subtasks associated with a particular task. For example, to complete a task, some subtasks associated with the task can and/or should be performed before other subtasks. For example, in the above example of the DOS attack on Web Server B, the first task of defining an address associated with an IP address of Host A should be performed before the second task of assigning the address to a blacklisted address list in a network policy. Accordingly, the task database 152 can store and/or maintain an order in which the subtasks are to be performed to complete the task. Such an order can be retrieved from the task database 152 by the task division module 204.

The task assignment module 208 assigns each task and/or subtask to a particular operator. In some embodiments, each task and/or subtask can be automatically assigned to an operator based on a type of the task, a priority level of the task, a qualification of an operator, a schedule of the operator, and/or the like. In such embodiments, for example, the task assignment module 208 can classify the type of the task and/or subtask based on information provided by the submitter and/or requestor of the task and/or trouble ticket. For example, a submitter of the task and/or trouble ticket can indicate a priority level. If the priority level of the task and/or trouble ticket is urgent, an operator having immediate availability can be assigned the task and/or subtask. Similarly, if the priority level of the task and/or trouble ticket is low, any qualified operator can be assigned the task and/or subtask.

Additionally, in some embodiments, the task assignment module 208 can receive task and/or subtask classification information from the task division module 204. For example, when the task division module 204 divides the task into subtasks, the task division module 204 can also classify and/or categorize the task and/or subtasks related to the task. Such classifications and/or categories associated with the tasks and/or subtasks can, for example, be stored in the task database 152 and/or another database. Such classifications and/or categories can be used to indicate a type of a task and/or subtask and be used to assign tasks and/or subtasks to suitable and/or qualified operators.

In some embodiments, an operator database 150 (FIG. 1) can be used to store qualifications and/or specialties of operators as well as schedules and availability of the operators. As such, when assigning tasks and/or subtasks to an operator, the task assignment module 208 can query the qualification database 150 to retrieve a list of possible operators for a specific category and/or classification of task and/or subtask. Additionally, the task assignment module 208 can retrieve availability information associated with the operators. Based on the category and/or classification of the task and/or subtask and/or the availability of the operators, the task assignment module 208 can assign a task and/or a subtask to an operator.

In other embodiments, a description of each task and/or subtask can be included within a list, pool and/or queue. In such embodiments, as an operator becomes available, the operator can select the task and/or subtask within the list, pool and/or queue. By selecting the task and/or subtask, the task and/or subtask can be assigned to the operator. In such a manner, the tasks and/or subtasks can be manually assigned. In some embodiments, such a list, pool and/or queue can classify, sort and/or categorize the tasks and/or subtasks. In such embodiments, each operator can select tasks and/or subtasks associated with and/or related to that operator's specialty, qualifications and/or experience.

The dynamic authentication module 206 can be used to update the permission database 142 (FIG. 1) in accordance with a task and/or subtask assigned to an operator. In some embodiments, for example, the dynamic authentication module 206 can provide an appropriate access right (e.g., a minimum level and/or type of access) to an operator to complete the assigned task and/or subtask. More specifically, in response to receiving a task and/or subtask and an identifier associated with an operator assigned the task and/or subtask, the dynamic authentication module 206 can determine an appropriate access right used to complete the assigned task and/or subtask. For example, in the above described example of the DOS attack, a first operator can be provided address-object creation rights to enable the first operator to define an address associated with an IP address of Host A. Similarly, a second operator can be provided access suitable to edit a policy to enable the second operator to assign the address to a blacklisted address list in a network policy. In some embodiments, the appropriate access right can be more targeted and/or narrow. For example, the first operator might be assigned address-object creation rights associated with a particular device (e.g., Host A) but not other devices. Similarly, for example, the second operator might be provided access suitable to edit only the blacklisted network policy and not other network policies. As such, a minimum and/or lower access right to perform a task can be provided.

In some embodiments, such access information can be stored within the task database 152. In such embodiments, the dynamic authentication module 206 can query the task database 152 to receive access information associated with the task and/or subtask. In other embodiments, the task division module 204 can retrieve the access information when querying the task database 152 for applicable subtasks. The task division module 204 can then send the access information to the dynamic authentication module 206. In still other embodiments, the access information can be stored in any other suitable database.

The dynamic authentication module 206 can cause the communication module 202 to send a signal to the authentication server 140 to cause the authentication server 140 to update and/or modify permissions and/or a access rights associated with the operator assigned the task and/or subtask. Similarly stated, when an operator is assigned a task and/or subtask, the access rights (e.g., type and/or level of access) associated with that operator's credentials can be automatically updated in the permission database 142 such that the operator has the appropriate access rights to accomplish, complete and/or perform the task and/or subtask. Such access rights can include the right to perform the task and/or subtask on a particular object (e.g., device, account, user, policy, etc.) but not other objects within the communication system 100. In other embodiments, the access rights associated with an operator's credentials are updated and/or modified such that the operator has the appropriate access rights to accomplish, complete and/or perform the task and/or subtask after each subtask preceding the subtask assigned to the operator in an order of subtasks is completed. For example, in the above described example of the DOS attack, the second operator might not be provided access rights suitable to edit the network policy until the first operator has defined the address associated with the IP address of Host A. In other embodiments, the entire task is assigned to a single user who is provided access rights to perform the entire task.

In some embodiments, when the operator completes the assigned task and/or subtask, the dynamic authentication module 206 can cause the communication module 202 to send a signal to the authentication server 140 to cause the authentication server 140 to revoke the access rights provided to the operator to complete the task and/or subtask. In such embodiments, access to portions of the communication system 100 is automatically provided on an as-needed basis and automatically revoked after the operator no longer has a need for the access. This increases the security of the communication system 100 as fewer operators have broad access to the communication system 100 at any given time.

The task status module 210 monitors the status of each task and/or subtask assigned. Specifically, the task status module 210 can maintain and/or update the status database 154. The status database 154 can maintain a state of the assigned tasks and/or subtasks. Additionally, in some embodiments, the status database 154 can store an indication or representation of the operator associated with a task and/or subtask, and can store authentication rights granted to that operator to complete the task and/or subtask. In some embodiments, the status database 154 can also include an identifier of an object (e.g., device, account, user, policy, etc.) on which that task and/or subtask is to be performed.

FIG. 3, for example, is a detailed illustration of a status database 300 structurally and functionally similar to the status database 154 of FIG. 1. The status database 300 includes a task column 302, an operator column 304, a status column 306 and an authentication column 308. Tasks and their associated subtasks are listed in the task column 302. For example, task T₁ includes subtask S₁, S₂, S₃ and S₄. In this example, the task T₁ was divided into the four subtasks S₁, S₂, S₃, S₄ by the task division module 204.

The operator column 304 lists the operator and/or operators associated with a task and/or subtask. For example, operators U₁, U₂ and U₃ are associated with task T₁ with operator U₁ being associated with subtask S₁, operator U₂ being associated with subtask S₂ and subtask S₄ and operator U₃ being associated with subtask S₃. In some embodiments, the operators V₁, U₂ and U₃ can be assigned to the task T₁ and the subtasks S₁, S₂, S₃ and S₄ by the task assignment module 208.

The authentication column 308 lists an identifier associated with the access right appropriate to complete and/or perform the associated tasks and/or subtasks. For example, for operator U₁ to complete and/or perform subtask S₁, the operator U₁ is provided and/or granted an access right denoted by A₁. In some embodiments, such an access right A₁ can be object specific (i.e., the access right can grant the operator U₁ the right to perform the subtask S₁ on a specified object but not on other objects in the system). Similarly, to complete and/or perform subtask S₂, the operator U₂ is provided and/or granted an access right denoted A₂. In some embodiments, the access rights are assigned to the operators and updated in the permission database 142 by the dynamic authentication module 206.

The status column 306 associates a status with each task and/or subtask. FIG. 3 illustrates three status levels: "open", "pending" and "closed". The status level "open" can mean that the operator is currently performing the task and/or the task is ready to be performed by the operator. Additionally, the operator associated with a task having a status of "open" has been assigned the appropriate access right to perform that task. Thus, for example, operator U₃ has the appropriate access right to perform subtask S₃ of task T₁. Further, operator U₃ has been provided the appropriate access right to perform subtask S₃ of task T₁.

The status level "closed" can mean that the operator has performed and/or completed the task and/or subtask. For example, operator U₁ has completed the subtask S₁ of task T₁. Additionally, in some embodiments, the status level "closed" means that the access right granted to the operator to perform and/or complete the task and/or subtask has been revoked. Thus, for example, in such embodiments, the operator U₁ no longer has the access right associated with subtask S₁ of task T₁.

The status level "pending" can mean that the operator is not yet able to perform the task and/or subtask. For example, the operator might be waiting on a preceding subtask in an order of subtasks associated with a task to be completed. For example, to complete the task T₁, the subtasks are performed in the order S₁, S₂, S₃ and then S₄. Accordingly, the subtask S₃ of task T₁ can be a prerequisite for performing subtask S₄ of task T₁. Thus, operator U₂ can only perform the subtask S₄ of task T₁ after operator U₃ completes and/or performs subtask S₃ of task T₁.

Further, in some embodiments, the operator assigned a subsequent task is not provided the access right associated with that subtask until all prerequisite subtasks are performed and/or completed. Accordingly, for example, operator U₂ is not provided the access right denoted by A₃ (see subtask S₄) until operator U₃ completes and/or performs the subtask S₃ of task T₁. In such embodiments, the security of the communication system 100 is further increased and access to the communication system 100 is further limited as only those operators assigned a task and/or subtask ready to be performed have the appropriate access right to perform the task and/or subtask.

In other embodiments, the columns 302, 304, 306, 308 can be included in other databases linked to the status database 300. For example, in some embodiments, the status database can include the task column 302 and the status column 306. In such embodiments, the values within the operator column 304 and/or the authentication column 308 can be stored within at least one other database. Such a database can be linked and/or associated with the status database 300. Accordingly, the query each of the databases to obtain information relevant to a task and/or subtask.

In use, a user of the communication system 100 (e.g., a user of a communication device 110) submits a request for a task and/or trouble ticket to the task management system 104. In some embodiments, the user can submit the request to the task management system 104 via the network 130 by completing a form having multiple fields on, for example, a communication device 110. As described in further detail herein with respect to FIG. 4, the values associated with such fields can be selected from a predetermined list. In other embodiments, any other suitable method of submitting a task and/or trouble ticket can be used, such as, for example, sending a written description of a problem and/or issue associated with the task and/or trouble ticket to the task management system 104 via the network 130.

The processor 122 of the task management server 120 receives the request at the communication module 202 (FIG. 2), which sends the request to the task initiation module 212. Based on the request, the task initiation module 212 defines a task and/or trouble ticket. Such a task and/or trouble ticket can be defined, for example, based on the values of the fields of the form. Allowing a user to select the values of the fields from a predetermined list allows the task initiation module 212 to parse the request and define the task and/or trouble ticket.

The task initiation module 212 sends the task and/or trouble ticket to the task division module 204. As discussed above, the task division module 204 divides the task into one or more subtasks using the task database 152. After the task division module 204 divides the task into one or more subtasks, the task assignment module 208 can assign the subtasks to various operators using the operator qualification database 150 and the characteristics of the subtasks as retrieved from the task database 152.

After each subtask has been assigned, the dynamic authentication module 206 can cause a signal to be sent to the authentication server 140 to provide an appropriate access right (e.g., a minimum type and/or level of access) to complete the subtask to each operator associated with a subtask. As discussed above, in some embodiments, the subtasks can be ordered sequentially. In such embodiments, the operator assigned the first subtask in the order can be provided the appropriate access right to complete the first subtask while the operator assigned the second subtask in the order can be provided the appropriate access right to complete the second subtask only when the operator assigned the first subtask completes and/or performs the first subtask. Additionally, in some embodiments, once the first subtask is completed, the appropriate access right to complete the first subtask can be revoked from the operator assigned the first subtask. In some embodiments, the appropriate access right to complete the first subtask can be revoked before the second subtask is initiated.

As discussed above, the status of each subtask can be maintained within the status database 154 by the task status module 210. Based on the status and/or order within a sequence of each subtask as maintained by the task status module 210, the dynamic authentication module 206 can provide access control signals (e.g., granting and/or revoking access to various operators) based on the status and/or order of the subtasks in the status database 154.

FIG. 4 illustrates a form 400 that a user can use to send a task and/or trouble ticket request to a task management system (e.g., task management system 104 shown and described with respect to FIG. 1). The form 400 includes multiple fields such as, for example, submitter, type of issue/request, devices/modules involved, date and priority. In other embodiments, any other suitable fields can be included in the form 400. Using the multiple fields, a user can sufficiently describe a task and/or problem to be performed and/or resolved.

In some embodiments, a list of values associated with each field can be predefined. In such embodiments, for example, the values associated with such fields can be selected from a predetermined list. For example, the priority level can be selected from three values (e.g., low, medium, high). For another example, the value of the type of issue and/or request field can be selected from a number of predetermined problems and/or issues that arise within a communication system. In such embodiments, for example, a user can select one or more of the predetermined values using a drop-down box, a list, checkboxes, radio buttons, and/or any other suitable user interface.

Each value associated with the fields in the predetermined list can include an identifier. Accordingly, the combination of the selected identifiers (e.g., the identifiers associated with the submitter, the devices/modules involved, the priority, etc.) can define the request, problem and/or task to be resolved and/or performed. More specifically, a task initiation module (e.g., task initiation module 212 shown and described with respect to FIG. 2) can use the identifiers to define the task and/or trouble ticket.

As described above, in other embodiments, any other method can be used to initiate a task and/or trouble ticket based on the request such as, for example, keyword recognition (e.g., OCR), audio recognition, periodic scheduling (e.g., for regular system maintenance), and/or the like.

A task management system 104, as shown and described above with respect to FIGS. 1-4 can be used and/or implemented in various types of systems. For example, as described above, a task management system can be used to provide task and/or trouble tickets to a systems and/or network administrator (e.g., a trouble ticket associated with a DOS attack). Additionally, in some embodiments, the task management system can be used to provide task and/or trouble tickets to computer support and/or help desk operators, account administrators, individuals involved in product development workflow and/or the like.

For example, a user of an online banking system can provide a request to an operator of the bank's system to update their personal information at the bank (e.g., address and telephone number). The task can be assigned to an operator who is dynamically provided an access right (e.g., a level and/or type of access) that allows the operator to update the user's address and telephone number, but not provide access to other types of user information (e.g., bank balance, bank account number, etc.) and/or to other users' addresses and/or telephone numbers. Once the user's address and telephone number are updated and the task marked complete, the access provided to the operator can be revoked. Similarly stated, once the task is marked complete, the operator can no longer update that user's address and/or telephone number.

For another example, a development of a product can be defined as a task in the task management system. The task (e.g., development of the product) can be divided into various subtasks (e.g., steps within the development process). The subtasks can be ordered and assigned to operators (e.g., employees). Once a first subtask immediately preceding a second subtask in the order is marked completed, the operator assigned the second subtask is provided an appropriate access right (e.g., a minimum level of access) to complete the second subtask. Additionally, the access right granted to an operator assigned the first subtask is revoked. Accordingly, the product development can progress as the subtasks are assigned to operators and/or groups of operators without providing the operators and/or groups of operators with broad system access. Such access rights can be specific to one or more objects associated with the assigned subtask.

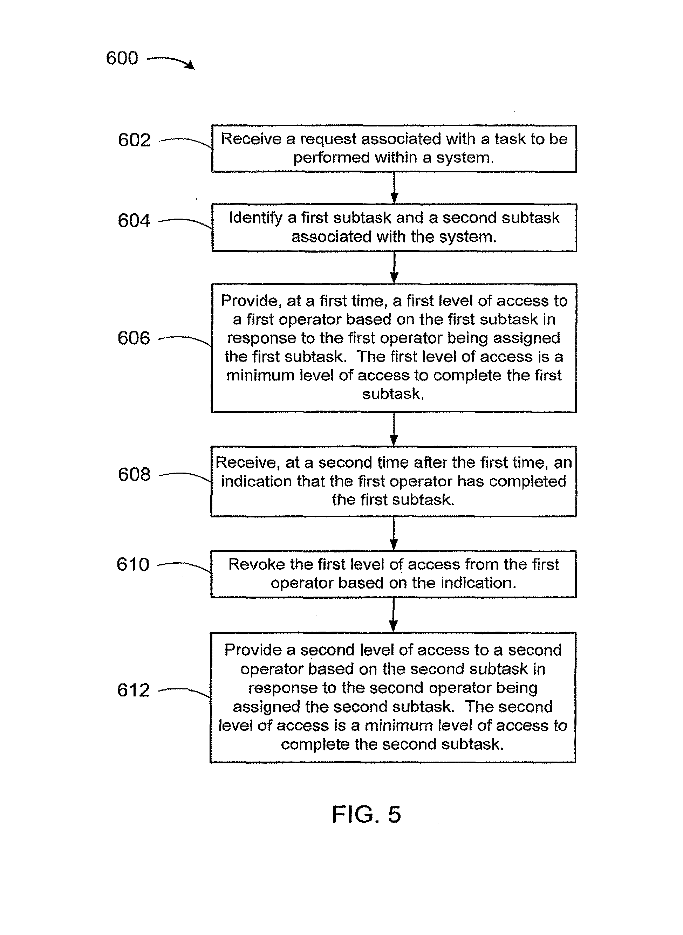

FIG. 5 is a flow chart illustrating a method 600 of managing a task, according to another embodiment. The method 600 includes receiving a request associated with a task to be performed within a system, at 602. As described above, in some embodiments, such a task can be a trouble ticket associated with a problem to be solved in a system. In other embodiments, the task can be a task that a user of a system would like performed and/or regular system maintenance.

A first subtask and a second subtask associated with the system are identified, at 604. A first access right is provided to a first operator, at a first time, based on the first subtask in response to the first operator being assigned the first subtask, at 606. The first access right can be a minimum level of access to complete the first subtask. Such a minimum level of access can be specific to one or more objects associated with the first subtask. In some embodiments, the first subtask can be assigned to the first operator based at least in part on at least one of a type of the first subtask, a priority level of the first subtask, a qualification of the first operator, a schedule of the first operator and/or the like.

An indication that the first operator has completed the first subtask is received at a second time after the first time, at 608. The first level of access is revoked from the first operator based on the indication, at 610. Similarly stated, the first level of access is revoked from the first operator once the first operator no longer needs the first level of access.

A second level of access is provided to a second operator based on the second subtask in response to the second operator being assigned the second subtask, at 612. The second level of access is a minimum level of access to complete the second subtask. Such a minimum level of access can be specific to one or more objects associated with the second subtask. Accordingly, the second operator can complete and/or perform the second subtask. The second level of access can be the same level and/or type of access and/or a different level and/or type of access than the first level of access.

While various embodiments have been described above, it should be understood that they have been presented by way of example only, and not limitation. Where methods described above indicate certain events occurring in certain order, the ordering of certain events may be modified. Additionally, certain of the events may be performed concurrently in a parallel process when possible, as well as performed sequentially as described above.

For example, FIGS. 1-5 describe various modules and/or databases executing functions and/or storing data. Not all modules and/or databases are necessarily included in every embodiment. In some embodiments, for example, a processor (e.g., processor 122) of a task management server (e.g., task management server 120) does not include a task division module (e.g., task division module 204) and/or a task database. In such embodiments, the task management system does not divide the task into subtasks. In other embodiments, the task management system allows an operator to manually divide the task into subtasks. Similarly, in some embodiments, for example, the data stored in the operator qualification database 150, the task database 152 and/or the status database 154 is stored within a single database.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices.

Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using Java, C++, or other programming languages (e.g., object-oriented programming languages) and development tools. Additional examples of computer code include, but are not limited to, control signals, encrypted code, and compressed code.

Aspects of the subject matter described herein are summarized in the following numbered clauses:
1. A non-transitory processor-readable medium storing code representing instructions to cause a processor to: receive a request associated with a task to be performed within a system; identify a first subtask and a second subtask associated with the task; provide, at a first time, a first access right to a first operator based on the first subtask in response to the first operator being assigned the first subtask, the first access being a level of access to complete the first subtask but not the second subtask; receive, at a second time after the first time, an indication that the first operator has completed the first subtask; revoke the first access right from the first operator based on the indication; and provide a second access right to a second operator based on the second subtask in response to the second operator being assigned the second subtask, the second access right being a level of access to complete the second subtask but not the first subtask.
2. The non-transitory processor-readable medium of clause 1, wherein the code representing instructions to cause the processor to provide the second access right to the second operator is executed by the processor in response to the indication.
3. The non-transitory processor-readable medium of clause 1, further comprising code representing instructions to cause the processor to: assign the first subtask to the first operator; and assign the second subtask to the second operator.
4. The non-transitory processor-readable medium of clause 1, further comprising code representing instructions to cause the processor to automatically assign the first subtask to the first operator based on at least one characteristic of the first subtask.
5. The non-transitory processor-readable medium of clause 1, wherein the code representing instructions to cause the processor to identify the first subtask and the second subtask includes code representing instructions to cause the processor to analyze an instruction associated with the request.
6. The non-transitory processor-readable medium of clause 1, further comprising code representing instructions to cause the processor to: receive an indication that the task has been preformed; and revoke the second access right from the second operator in response to the indication.
7. The non-transitory processor-readable medium of clause 1, wherein the request includes a form submitted by an operator, the form including a plurality of parameters, the code representing instructions to cause the processor to identify includes code representing instructions to cause the processor to automatically identify the first subtask and the second subtask based on the plurality of parameters.
8. The non-transitory processor-readable medium of clause 1, wherein the first subtask is performed prior to the second subtask.
9. The non-transitory processor-readable medium of clause 1, wherein the task is associated with a trouble ticket.
10. An apparatus, comprising: a memory; a processing device;
   a task division module implemented within at least one of the memory or the processing device, the task division module operable to receive a request associated with a task to be performed, the task division module operable to divide the task into a plurality of subtasks; and a dynamic authentication module implemented within at least one of the memory or the processing device, the dynamic authentication module operable to provide an access right to an operator from a plurality of operators assigned a subtask from the plurality of subtasks, the level of access for the operator from the plurality of operators being an access right to complete the subtask from the plurality of subtasks assigned to that operator from the plurality of operators.
11. The apparatus of clause 10, further comprising: a task assignment module implemented within at least one of the memory or the processing device, the task assignment module operable to assign each subtask from the plurality of subtasks to an operator from the plurality of operators based on a characteristic of each subtask from the plurality of subtasks and a qualification of each operator from the plurality of operators.
12. The apparatus of clause 10, further comprising: an operator qualification database; and a task assignment module implemented within at least one of the memory or the processing device, the task assignment module being operably coupled to the operator qualification database, the task assignment module being operable to assign each subtask from the plurality of subtasks to an operator from the plurality of operators based on a plurality of records within the operator qualification database associated with the plurality of operators.
13. The apparatus of clause 10, wherein the dynamic authentication module is operable to access a permission database storing permissions associated with each operator from the plurality of operators, the dynamic authentication module operable to send an update signal to revise a permission within the permission database associated with the operator from the plurality of operators.
14. The apparatus of clause 10, wherein the operator from the plurality of operators is a first operator and the access right is a first access right, the task division module operable to order the plurality of subtasks such that a first subtask from the plurality of subtasks is to be performed prior to a second subtask from the plurality of subtasks, the dynamic authentication module operable to provide a second access right to a second operator from the plurality of operators assigned the second subtask when the first subtask is complete, the second access right being an access right to complete the second subtask but not the first subtask.
15. The apparatus of clause 10, wherein the dynamic authentication module is operable to revoke the access right from the operator from the plurality of operators when the subtask from the plurality of subtasks is complete.
16. The apparatus of clause 10, further comprising: a task assignment module implemented within at least one of the memory or the processing device, the task assignment module operable to assign each subtask from the plurality of subtasks to an operator from the plurality of operators.
17. An apparatus, comprising: a memory; a processing device; a task assignment module implemented within at least one of the memory or the processing device, the task assignment module operable to receive a request associated with a task and assign the task to an operator based at least in part on at least one of a type of the task, a priority level of the task, a qualification of the operator, or a schedule of the operator; and a dynamic authentication module implemented within at least one of the memory or the processing device, the dynamic authentication module operable to provide an access right to the operator such that the operator can perform the task, the dynamic authentication module operable to revoke the access right when the operator completes the task, the access right being an access right to complete the task.
18. The apparatus of clause 17, wherein the dynamic authentication module is operable to revoke the access right when the dynamic authentication module receives an indication that the task is complete.
19. The apparatus of clause 17, wherein the request includes a form submitted by a user, the form including a plurality of parameters, the task assignment module operable to assign the task to the operator based at least in part on the plurality of parameters.
20. The apparatus of clause 17, further comprising: an operator qualification database operably coupled to the task assignment module, the task assignment module being operable to assign the task to the operator based on a record within the operator qualification database associated with the operator.
21. The apparatus of clause 17, wherein the dynamic authentication module is operably coupled to a permission database, the permission database storing permissions associated with the operator, the dynamic authentication module operable to revise a permission within the permission database associated with the operator.
22. The apparatus of clause 17, wherein the task is associated with a trouble ticket.

While various embodiments have been described above, it should be understood that they have been presented by way of example only, not limitation, and various changes in form and details may be made. Any portion of the apparatus and/or methods described herein may be combined in any combination, except mutually exclusive combinations. The embodiments described herein can include various combinations and/or sub-combinations of the functions, components and/or features of the different embodiments described.

## Claims

1. A method implemented in a processing device, comprising:
receiving a request associated with a task to be performed within a system;
providing, at a first time, an access right to an operator based on the task in response to the operator being assigned the task, the access right being a level of access to complete the task;
receiving, at a second time after the first time, an indication that the operator has completed the task;
revoking first access right from the first operator based on the indication.

2. The method of claim 1, wherein the task is a first subtask to be completed prior to a second subtask, the operator is a first operator, and the access right is a first access right, the method further comprising:
identifying the first subtask and the second subtask; and
providing a second access right to a second operator based on the second subtask in response to the indication and the second operator being assigned the second subtask, the second access right being a level of access to complete the second subtask but not the first subtask.

3. The method of claim 2, wherein the identifying includes analyzing an instruction associated with the request.

4. The method of claim 2 or claim 3, wherein the indication is a first indication, the method further comprising:
receiving a second indication that the second operator has completed the second subtask; and
revoking the second access right from the second operator in response to the second indication.

5. The method of any one of claims 2 to 4, wherein the request includes a form submitted by a third operator, the form includes a plurality of parameters, the identifying includes automatically identifying the first subtask and the second subtask is based on the plurality of parameters.

6. The method of any one of the preceding claims, wherein the task is associated with a trouble ticket.

7. The method of any one of the preceding claims, further comprising:
automatically assigning the task to the operator based on at least one characteristic of the task.

8. An apparatus, comprising:
a memory;
a processing device; and
a dynamic authentication module implemented within at least one of the memory or the processing device, the dynamic authentication module being operable to provide an access right to an operator from a plurality of operators assigned a first subtask from a plurality of subtasks, the level of access for the operator from the plurality of operators being an access right to complete the first subtask from the plurality of subtasks assigned to that operator from the plurality of operators and not a second subtask from the plurality of subtasks.

9. The apparatus of claim 8, further comprising:
a task division module implemented within at least one of the memory or the processing device, the task division module being operable to receive a request associated with a task to be performed, the task division module being operable to divide the task into the plurality of subtasks.

10. The apparatus of claim 9, wherein the operator from the plurality of operators is a first operator and the access right is a first access right, the task division module being operable to order the plurality of subtasks such that the first subtask from the plurality of subtasks is to be performed prior to the second subtask from the plurality of subtasks, the dynamic authentication module being operable to provide a second access right to a second operator from the plurality of operators assigned the second subtask after the first subtask is complete, the second access right being an access right to complete the second subtask but not the first subtask.

11. The apparatus of any one of claims 8 to 10, further comprising:
a task assignment module implemented within at least one of the memory or the processing device, the task assignment module being operable to assign the first subtask from the plurality of subtasks to the operator from the plurality of operators based on a characteristic of the first subtask and a qualification of the operator from the plurality of operators.

12. The apparatus of any one of claims 8 to 11, further comprising:
an operator qualification database; and
a task assignment module implemented within at least one of the memory or the processing device, the task assignment module being operably coupled to the operator qualification database, the task assignment module being operable to assign the first subtask from the plurality of subtasks to the operator from the plurality of operators based on a record within the operator qualification database associated with the operator.

13. The apparatus of any one of claims 8 to 11, wherein the operator is a first operator from the plurality of operators, the apparatus further comprising:
a task assignment module implemented within at least one of the memory or the processing device, the task assignment module being operable to assign the first subtask from the plurality of subtasks to the first operator from the plurality of operators, the task assignment module being operable to assign the second subtask from the plurality of subtasks to a second operator from the plurality of operators.

14. The apparatus of any one of claims 8 to 13, wherein the dynamic authentication module is operable to access a permission database storing permissions associated with the operator from the plurality of operators, the dynamic authentication module being operable to send an update signal to revise a permission within the permission database associated with the operator from the plurality of operators.

15. The apparatus of any one of claims 8 to 14, wherein the dynamic authentication module is operable to revoke the access right from the operator from the plurality of operators when the first subtask from the plurality of subtasks is complete.
